# EUROPEAN PATENT APPLICATION

(11) **EP 2 704 016 A2**
(43) Date of publication of application: **05.03.2014**
(21) Application number: 13180054.2
(22) Date of filing: 12.08.2013
(51) Int. Cl.: G06F 13/16

(54) **Memory control technique**

(30) Priority: 31.08.2012 JP 2012191113
(71) Applicant: FUJITSU LIMITED, Kawasaki-shi, Kanagawa 211-8588 (JP)
(72) Inventor: Fukumura, Hiromi, Kanagawa, 211-8588 (JP); Suga, Katsuya, Kanagawa, 211-8588 (JP)
(74) Representative: HOFFMANN EITLE

(57) **Abstract**

A disclosed information processing apparatus includes: one or plural memories, each of which includes a self-refresh function; and a memory control unit that stops a patrol that includes reading and error correction with respect to a memory among the one or plural memories, upon starting self-refresh of the one or plural memories, and that restarts the patrol, upon stopping the self-refresh of the one or plural memories.

## Description

This invention relates to a memory control.

In order to ensure data that is stored in a memory that is connected to an arithmetic unit, an arithmetic unit that has a patrol function for the memory is known. The patrol function is a function that periodically reads data that is stored in the memory, and detects errors and performs error correction. For example, by checking the consistency of a parity bit that is given to the data, 1 bit error is detected. Furthermore, when 1 bit error is detected, the data is corrected then rewritten to the memory to remove intermittent trouble.

In order to reduce the power consumed by the operation of the memory, a memory is also known that has a power-down function. According to the power-down function, power consumption is suppressed by stopping part of the circuits inside the memory.

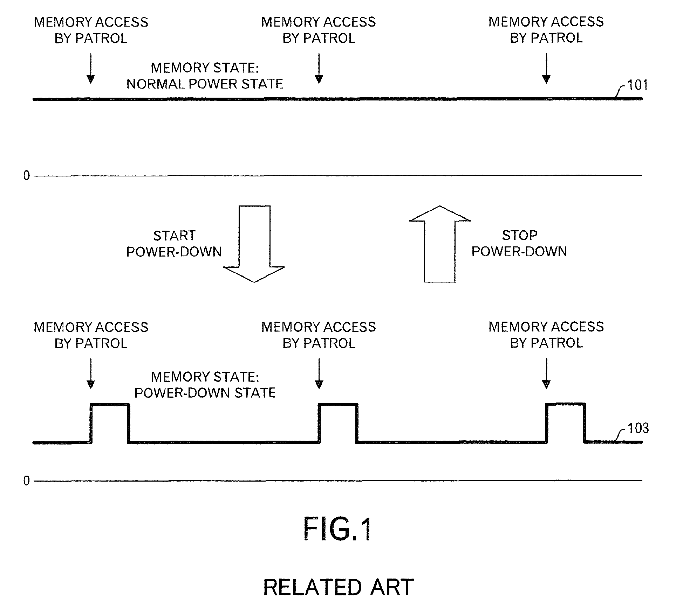

FIG. 1 illustrates a state of power consumption 101 in the normal power state when the power-down function is not performed, and a state of power consumption 103 in the power-down state when the power-down function is performed. In the normal power state, the power consumption does not change regardless of whether or not there is a memory access by the patrol function.

On the other hand, in the power-down state, the power consumption increases temporarily when the memory is accessed by the patrol function and data is read from the memory. However, while the memory is not being accessed by the patrol function, the power consumption is suppressed, and thus overall power saving is possible by using the power-down function.

In any of the normal power state and power-down state, the arithmetic unit periodically performs an operation for refreshing the memory.

However, it is desired that the power consumption relating to the operation of the memory be further reduced.

As one aspect, an object of this invention is to suppress the power consumption relating to the memory operation.

An information processing apparatus relating to one mode of this invention includes: (A) one or plural memories, each of which includes a self-refresh function; and (B) a memory control unit that stops a patrol that includes reading and error correction with respect to a memory among the one or plural memories, upon starting self-refresh of the one or plural memories, and that restarts the patrol, upon stopping the self-refresh of the one or plural plural memories.

Reference will now be made, by way of example, to the accompanying Drawings, in which:
FIG. 1 is a diagram depicting power consumption in a normal power state and power-down state;
FIG. 2 is a diagram depicting a configuration example of a server apparatus;
FIG. 3 is a diagram depicting a configuration example of a system board;
FIG. 4 is a diagram depicting a configuration example of a physical partition;
FIG. 5 is a diagram depicting a configuration example of a CPU unit and memories;
FIG. 6 is a diagram depicting an outline of a power mode in a first embodiment;
FIG. 7 is a diagram depicting a state transition in the normal mode in the first embodiment;
FIG. 8 is a diagram depicting a state transition in a power-saving mode in the first embodiment;
FIG. 9 is a diagram depicting power consumption in the power-saving mode in the first embodiment;
FIG. 10 is a diagram depicting power consumption in a case where patrol is performed in a self-refresh state;
FIG. 11 is a diagram depicting a configuration example of a memory access control circuit in the first embodiment;
FIG. 12 is a diagram depicting a processing flow of a power-down control routine;
FIG. 13 is a diagram depicting a processing flow of a self-refresh control routine (A);
FIG. 14 is a diagram depicting a configuration example of a hypervisor;
FIG. 15 is a diagram depicting a main processing flow example of the hypervisor in the first embodiment;
FIG. 16 is a diagram depicting a flow example of an initialization processing (A) in the normal mode;
FIG. 17 is a diagram depicting a flow example of a normal mode processing (A1);
FIG. 18 is a diagram depicting a flow example of an initialization processing (A) in the power-saving mode;
FIG. 19 is a diagram depicting a flow example of a power-saving mode processing (A);
FIG. 20 is a diagram depicting a configuration example of a memory access control circuit in a second embodiment;
FIG. 21 is adiagramdepictingaprocessing flow example of a self-refresh control routine (B);
FIG. 22 is a diagram depicting a processing flow of a patrol control routine;
FIG. 23 is a diagram depicting a flow example of an initialization processing (B) in the normal mode;
FIG. 24 is a diagram depicting a flow example of an initialization processing (B) in the power-saving mode;
FIG. 25A is a diagram depicting a flow example of a power-saving mode processing (B1);
FIG. 25B is a diagram depicting a flow example of the power-saving mode processing (B1);
FIG. 26 is a diagram depicting an outline of power modes in a third embodiment;
FIG. 27A is a diagram depicting a flow example of a power-saving mode processing (B2);
FIG. 27B is a diagram depicting a flow example of the power-saving mode processing (B2);
FIG. 28 is a diagram depicting an outline of power modes in a fourth embodiment;
FIG. 29 is a diagram depicting a state transition in a normal mode in the fourth embodiment;
FIG. 30 is a diagram depicting power consumption in the normal mode in the fourth embodiment;
FIG. 31 is a diagram depicting power consumptionwhenpatrol is performed in a self-refresh state;
FIG. 32 is a diagram depicting a main processing flow example of a hypervisor in the fourth embodiment;
FIG. 33 is a diagram depicting a flow example of a normal mode processing (A2);
FIG. 34 is a diagram depicting a flow example of a normal mode processing (B); and
FIG. 35 is a functional block diagram of a computer.

### [Embodiment 1]

In the present embodiment, the power consumption is suppressed by using a memory having a self-refresh function. A server apparatus will be explained as an example of an information processing apparatus that uses the memory having the self-refresh function. However, other computer apparatuses may employ the memory having the self-refresh function. Self-refresh is one refresh operation of a dynamic Random Access Memory (RAM), and is a refresh operation that is automatically executed in the RAM. During the self-refresh, it is possible to reduce the power consumption of the RAM by refreshing memory cells inside the RAM using a clock signal that is generated inside the RAM.

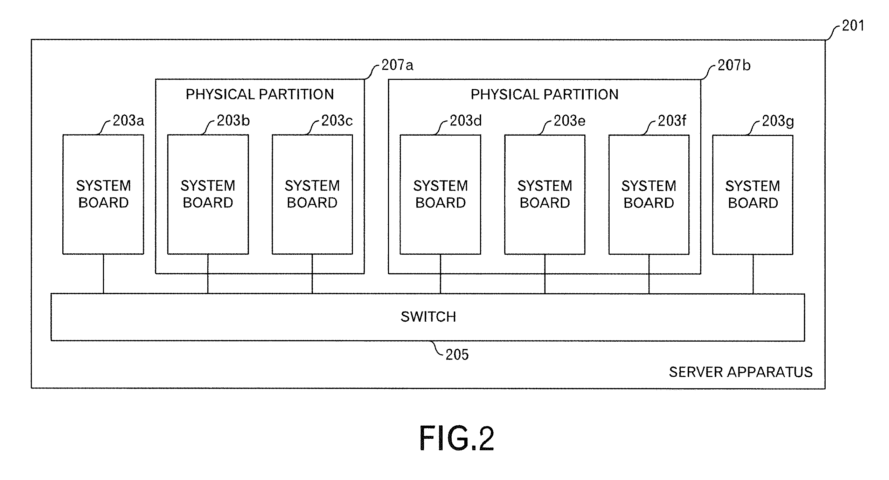

FIG. 2 illustrates a configuration example of a server apparatus. The server apparatus 201 has plural system boards 203. The plural system boards 203 are connected by way of a switch 205. In the example in FIG. 2, system boards 203a to 203g are connected by way of the switch 205.

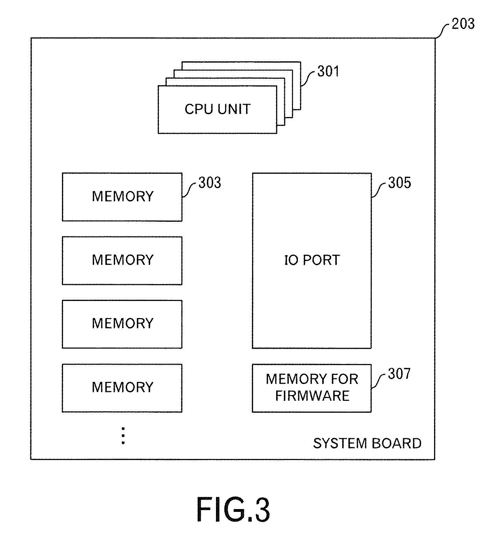

The system boards 203 will be explained. FIG. 3 illustrates a configuration example of the system boards 203. Each system board 203 has plural Central Processing Unit (CPU) units 301. Moreover, each system board 203 has plural memories 303. Furthermore, each system board 203 has an IO port 305 for performing data input and output. The memories 303 are used as a main memory for the CPU units 301. In addition to the plural memories 303, each system board 203 has a memory 307 for firmware. Firmware is stored in the memory 307 for the firmware. A hypervisor described later is also stored in the memory 307 for the firmware. A flash memory or a Read Only Memory (ROM), for example, is used for the memory 307 for the firmware. Each CPU unit 301 is an example of a memory control unit that controls the memories 303.

Returning to the explanation of FIG. 2, the server apparatus 201 is divided into plural physical partitions 207. In the example in FIG. 2, the server apparatus 201 has a physical partition 207a and physical partition 207b. The physical partitions 207 include one or plural system boards 203. In the example in FIG. 2, the physical partition 207a includes system board 203b and system board 203c. The physical partition 207b includes system board 203d to system board 203f. The system board 203a and system board 203g are not included in any physical partition 207.

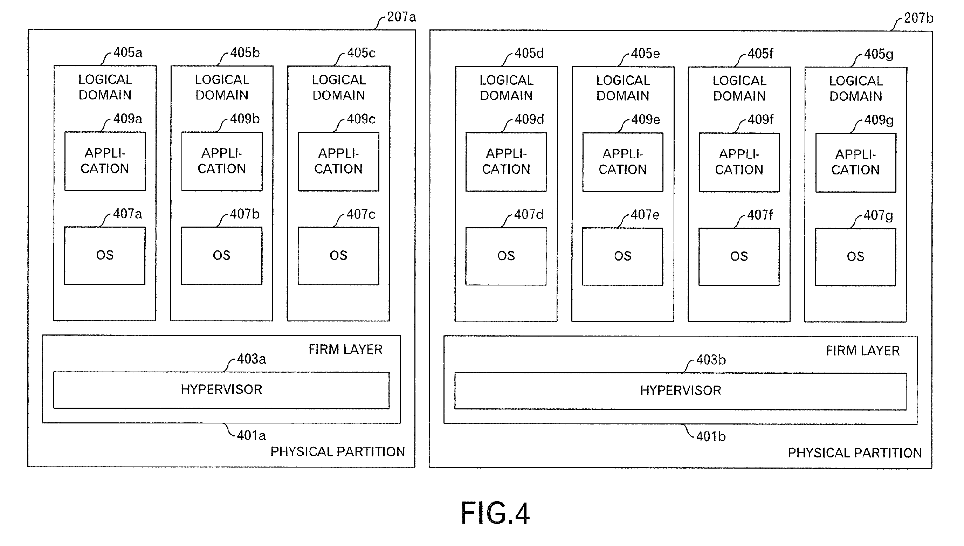

The configuration inside the physical partition 207 will be explained. FIG. 4 is a drawing illustrating a configuration example of the physical partitions 207. The physical partition 207 has a hypervisor 403 in a firmware layer 401. In the example in FIG. 4, the physical partition 207a has a hypervisor 403a in the firmware layer 401a, and the physical partition 207b has a hypervisor 403b in a firmware layer 401b. The hypervisors 403 are control programs for realizing a virtual machine. One or plural operating systems 407 operate on the hypervisor 403.

In the example in FIG. 4, operating systems 407a to 407c operate in the physical partition 207a, and operating systems 407d to 407g operate in the physical partition 207b.

Logical domain 405 is formed in a range managed by the operating system 407. One or plural applications 409 operate inside the logical domain 405. In FIG. 4, for example, application 409a operates on the operating system 407a of the logical domain 405a. Application 409b operates on the operating system 407b of the logical domain 405b. Application 409c operates on the operating system 407c of the logical domain 405c. Moreover, application 409d operates on the operating system 407d of the logical domain 405d. Application 409e operates on the operating system 407e of the logical domain 405e. Application409f operates on the operating system 407f of the logical domain 405f. Application 409g operates on the operating system 407g of the logical domain 405g.

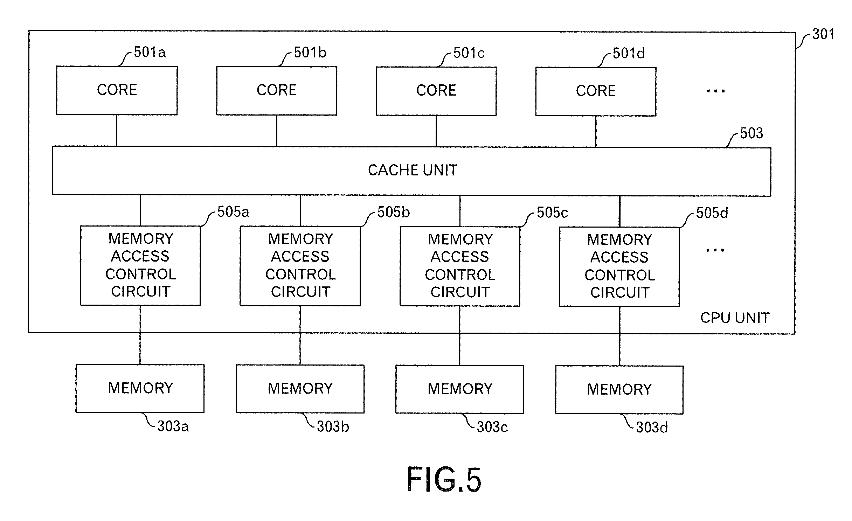

Next, the configuration of the CPU units 301 and the memories 303 will be explained. FIG. 5 illustrates a configuration example of the CPU unit 301 and memories 303. A CPU unit 301 has plural cores 501. A core 501 is an example of an arithmetic unit that reads out programs and/or data that are stored in a memory 303 to execute arithmetic operations. Each core 501 is connected to plural memory access control circuits 505 by way of a cache unit 503. The cache unit 503 internally has a cache memory. When data that is requested by the core 501 is stored in the cache memory, the cache unit 503 reads the data from the cache memory and outputs the read data to the core 501. When data that is requested by the core 501 is not stored in the cache memory, the cache unit 503 acquires the data from the memory 303 by way of the memory access control circuit 505, and outputs the acquired data to the core 501.

The memory access control circuit 505 connects with the memory 303 that is the object of control, and accesses the memory 303 that is the object of control in response to a request. The memory access control circuit 505 instructs the memory 303 to change the memory state, and performs operations for stably saving data. In this example, the memory access control circuit 505 is connected to one memory, however, may also be connected to plural memories.

In the example in FIG. 5, the CPU unit 301 has plural cores 501, however, the CPU unit 301 may have only one arithmetic unit. In the example in FIG. 5, the CPU unit 301 is connected to plural memories, however, the CPU unit 301 may be connected to only one memory.

The memories 303 are volatile memories. The memories 303, for example, are Dynamic Random Access Memories (DRAM). The memory states of the memories 303 can be divided into a normal power state, a power-down state, and a self-refresh state. The power-down state is a state in which part of the memory circuit is stopped, however, reading and writing can be performed. The self-refresh state is a state in which the input clock to the memory is inactive, and self-refresh is performed. In the self-refresh state, reading from and writing to the memory are not performed.

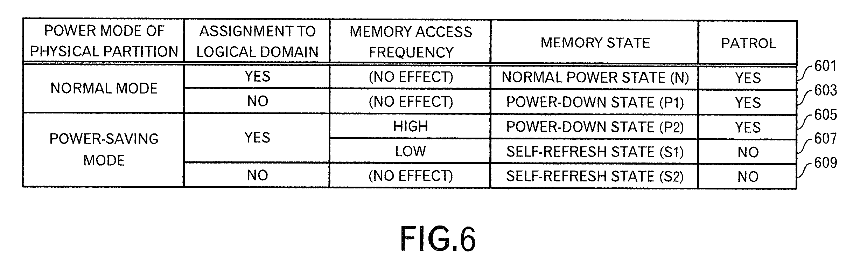

FIG. 6 is a drawing illustrating an outline of power modes in a first embodiment. In this example, a normal mode or power-saving mode is selected as the power modes of each physical partition 207. The states of the memory 303 are switched depending on whether or not the memory 303 is assigned to a logical domain. The states of the memory 303 are also switched according to the memory access frequency. Low memory access frequency represents a state in which the frequency of the memory access is equal to or less than a predetermined threshold value, or in other words, represents that the memory 303 was not accessed in a predetermined period of time. Similarly, high memory access frequency represents a state in which the frequency of the memory access is greater than a predetermined threshold value, or in other words, represents that the memory 303 was accessed in the predetermined period of time. Moreover, whether or not patrol is performed is set for each state of each memory 303.

Records 601 and 603 represents two states in the normal mode. As illustrated in the record 601, when there is an assignment to a logical domain, the patrol is performed so that the memory state is the normal power state (N). As illustrated in the record 603, when there is no assignment to any logical domain, the patrol is performed so that the memory state is the power-down state (P1). In the following, in order to distinguish and explain each state, reference symbols such as (P1) will be used.

Record 605, record 607 and record 609 illustrate three states in the power-saving mode. As illustrated in the record 605, when there is an assignment to a logical domain, and the memory access frequency is high, the patrol is performed so that the memory state is the power-down state (P2). As illustrated in the record 607, when there is an assignment to a logical domain, and the memory access frequency is low, control is carried out not to perform the patrol, so that the memory state is the self-refresh state (S1). As illustrated in the record 609, when there is no assignment to a logical domain, control is carried out not to perform the patrol, so that the memory state is the self-refresh state (S2).

In the figure, an item including an expression" (no effect) " represents that the item does not affect identification of the memory state.

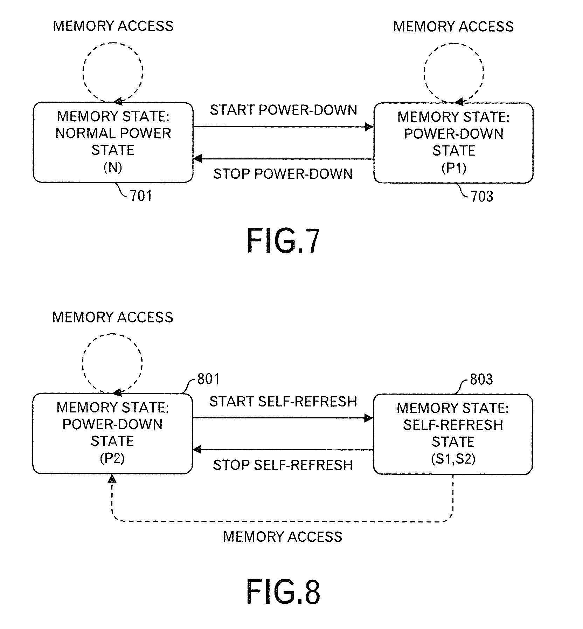

FIG. 7 illustrates the transition of states in the normal mode in this first embodiment. In case where the memory state is the normal power state (N) 701, the state does not change even when the memory 303 is accessed. When the memory state is the normal power state (N) 701 and the power-down function of the memory 303 starts, the memory state shifts to the power-down state (P1) 703. In case where the memory state is the power-down state (P1) 703, the state does not change even when the memory 303 is accessed. In case where the memory state is the power-down state (P1) 703 and the power-down function of the memory 303 is stopped, the memory state moves to the normal power state (N) 701.

The power consumption in the normal mode is as illustrated in FIG. 1.

FIG. 8 illustrates the transition of the states in the power-saving mode of the first embodiment. In case where the memory state is the power-down state (P2) 801, the state does not change even when there is an access to the memory 303. When the memory state is the power-down state (P2) 801, and the self-refresh function of the memory 303 starts, the memory state shifts to the self-refresh state (S1, S2) 803. When the memory state is the self-refresh state (S1, S2) 803, and the self-refresh state of the memory 303 is stopped, the memory state shifts to the power-down state (P2) 801. In case where the memory state is the self-refresh state (S1) 803, the memory state also shifts to the power-down state (P2) 801 when there is an access to the memory 303.

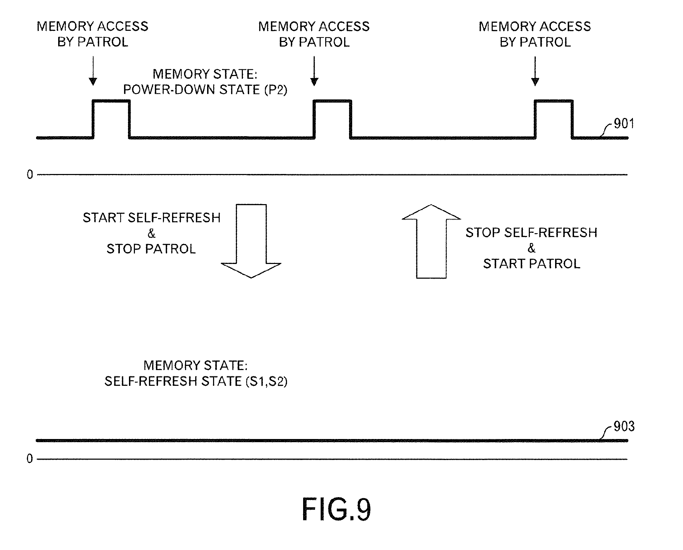

FIG. 9 illustrates the power consumption in the power-saving mode of the first embodiment. When the memory state is the power-down state (P2) andthereisanaccesstothememory303byapatroloperation, the power consumption 901 increases temporarily, however, while there is no access to the memory 303, the power consumption 901 is relatively low. When the self-refresh function of the memory 303 is started and the patrol operation is stopped, the power consumption 903 is steadily kept low. Then, when the self-refresh function is stopped, and the patrol operation is started again, the power consumption returns to the state of the power consumption 901.

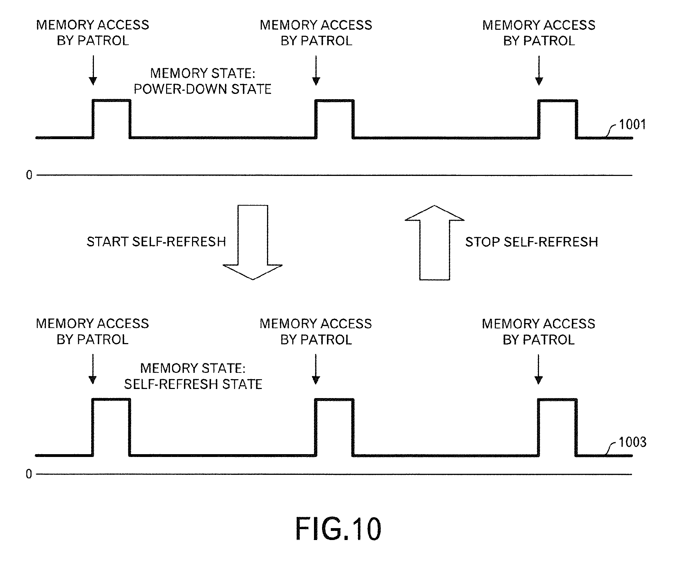

Here, for comparison, a case where the patrol operation is not stopped is also explained. FIG. 10 illustrates the power consumption when the patrol operation is performed in the self-refresh state. When the patrol operation is continued even though the self-refresh function is started, the power consumption 1003 becomes high each time the access to the memory 303 is performed by the patrol operation. Therefore, when compared with the case in FIG. 9, the overall power-saving effect is small.

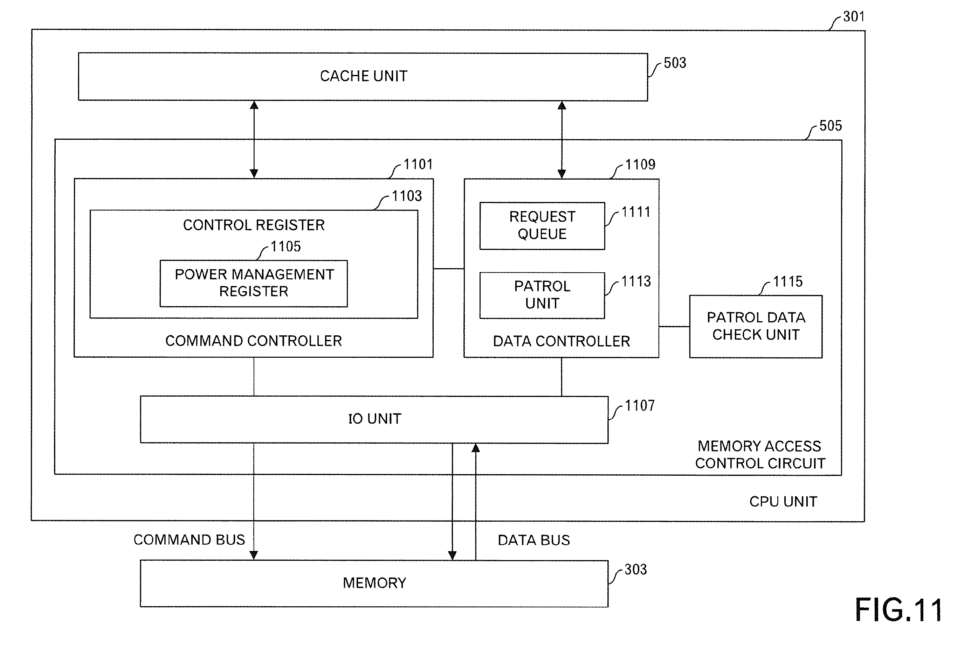

Here, the configuration of the memory access control circuits 505 will be explained. FIG. 11 illustrates a configuration example of the memory access control circuit 505 of this first embodiment. The memory access control circuit 505 has a command controller 1101, an IO unit 1107, a data controller 1109 and a patrol data check unit 1115. The command controller 1101 receives a command from the core 501 by way of the cache unit 503, and executes the command. In order to receive a command, the command controller 1101 has a control register 1103. In this embodiment, the command controller 1101 has a power management register 1105 as the control register 1103.

As commands, the power-management register 1105 receives a power-down start request, power-down stop request, self-refresh start request and self-refresh stop request. When a command is received, the command controller 1101 starts a power-down function, stops a power-down function, starts a self-refresh function, or stops a self-refresh function for the memory 303 by way of the IO unit 1107. Moreover, the power-management register 1105 is also used for making available the power-down operation state and the self-refresh operation state.

The data controller 1109 receives data operation requests (i.e. request data representing data concerning a request) from the core 501 by way of the cache unit 503, and performs data operations. More specifically, the data controller 1109 reads and writes data. In order to receive the data operation requests, the data controller 1109 has a request queue 1111.

The data controller 1109 stores request data in the request queue 1111, and then reads data from or writes data to the memory 303 by way of the IO unit 1107 according to the contents of the request data.

Moreover, the data controller 1109 has a patrol unit 1113 that performs a patrol operation. When the start of the patrol operation is instructed from the command controller 1101, the patrol unit 1113 reads data in sequence from the memory 303, and outputs the read data to the patrol data check unit 1115. The patrol data check unit 1115 performs a parity check for the data received from the patrol unit 1113. The patrol data check unit 1115 then returns the check result to the patrol unit 1113. When an error is detected, the patrol data check unit 1115 further returns correction data to the patrol unit 1113. The patrol unit 1113 writes back the correction data in the original address by way of the IO unit 1107. When the stop of the patrol operation is instructed from the command controller 1101, the data controller 1109 terminates the parity check and data correction operations.

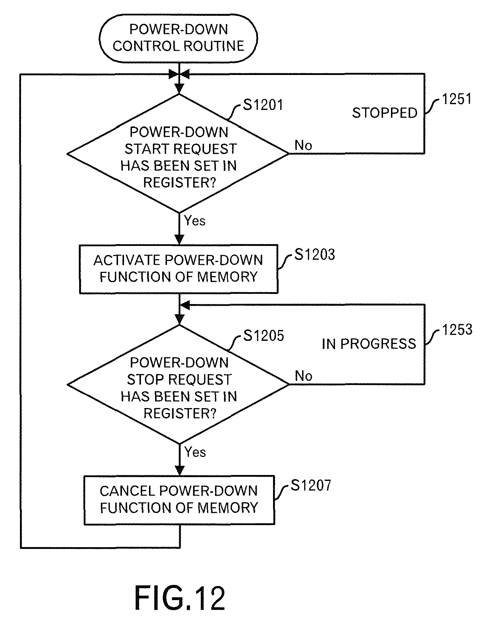

Next, the operation in the command controller 1101 will be explained. First, power-down control will be explained. FIG. 12 illustrates a processing flow of a power-down control routine as one example. The command controller 1101 determines whether or not a power-down start request has been set in the power management register 1105 (S1201). When it is determined that a power-down start request has not been set in the power management register 1105, the processing returns to S1201 through a path 1251. In other words, the power-down function is stopped while the power-down start request is not set.

When it is determined that the power-down start request has been set in the power management register 1105, the command controller 1101 activates the power-down function of the memory 303 (S1203). Then, the command controller 1101 determines whether or not a power-down stop request has been set in the power management register 1105 (S1205). When it is determined that the power-down stop request has not been set in the power management register 1105, the processing returns to S1205 through a path 1253. In other words, the power-down function is being performed while the power-down stop request is not set. When it is determined that the power-down stop request has been set in the power management register 1105, the command controller 1101 cancels the power-down function of the memory 303 (S1207). Canceling the function means stopping the operation. Then, the processing returns to S1201.

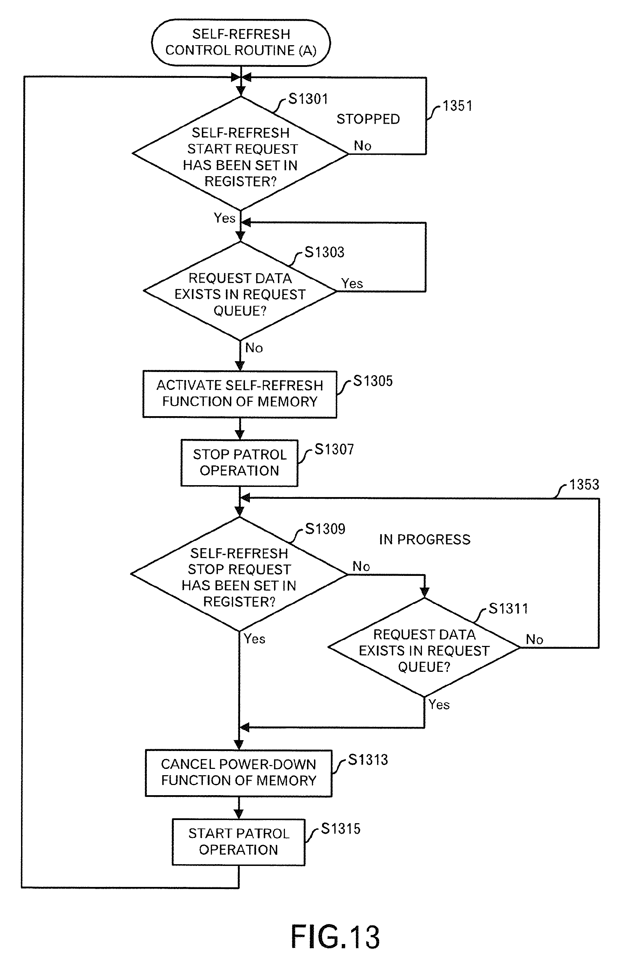

Next, self-refresh control will be explained. FIG. 13 illustrates a processing flow of the self-refresh control routine (A) as one example. The command controller 1101 determines whether or not a self-refresh start request has been set in the power management register 1105 (S1301). When it is determined that the self-refresh start request has not been set in the power management register 1105, the processing returns to S1301 through a path 1351. In other words, the self-refresh function is being stopped while the self-refresh start request is not set.

When it is determined that the self-refresh start request has been set in the power management register 1105, the command controller 1101 determines whether or not there is request data in the request queue 1111 (S1303). When it is determined that there is request data in the request queue 1111, data operation is being performed, so the command controller 1101 waits until there is no request data in the request queue 1111. When it is determined that there is no request data in the request queue 1111, the command controller 1101 activates the self-refresh function of the memory 303 (S1305). In other words, the command controller 1101 cause the memory 303 to starts the self-refresh. The command controller 1101 further stops the patrol operation by the data controller 1109 (S1307). The command controller 1101 then determines whether or not a self-refresh stop request has been set in the power management register 1105 (S1309). When it is determined that the self-refresh stop request has not been set in the power management register 1105, the command controller 1101 further determines whether there is request data in the request queue 1111 (1311). When it is determined that there is no request data in the request queue 1111, the processing returns to the S1309 through a path 1353. In other words, the self-refresh is being executed while the self-refresh stop request is not set and no request data exists.

When it is determined at the S1309 that the self-refresh stop request has been set in the power management register 1105, or when it is determined at the S1311 that there is request data in the request queue 1111, the command controller 1101 cancels the self-refresh function in the memory 303 (S1313). In other words, the command controller 1101 stops the self-refresh of the memory 303. Furthermore, the command controller 1101 causes the data controller 1109 to start the patrol operation (S1315). In other words, the command controller 1101 restarts the stopped patrol operation. Then, the processing returns to the S1301.

In the self-refresh control routine, the patrol operation is linked with the self-refresh. In so doing, when the memory 303 returns from the waiting state, it is possible to automatically restart the patrol operation.

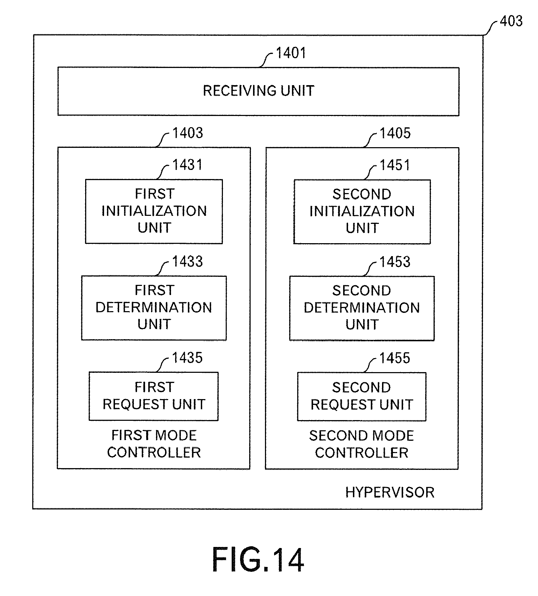

Next, the hypervisor 403 will be explained. FIG. 14 illustrates a configuration example of the hypervisor 403. The hypervisor 403 has a receiving unit 1401, a first mode controller 1403 and a second mode controller 1405. The receiving unit 1401 receives a switching instruction of the power mode. The first mode controller 1403 performs control in the normal mode. The second mode controller 1405 performs control in the power-saving mode. The first mode controller 1403 has a first initialization unit 1431, a first determination unit 1433 and a first request unit 1435. The first initialization unit 1431 performs initialization for shifting to the normal mode. The first determination unit 1433 performs a determination processing in the normal mode. The first request unit 1435 performs a request processing in the normal mode. The second mode controller 1405 has a second initialization unit 1451, a second determination unit 1453 and a second request unit 1455. The second initialization unit 1451 performs initialization for shifting to the power-saving mode. The second determination unit 1453 performs a determination processing in the power-saving mode. The second request unit 1455 performs a request processing in the power-saving mode.

The core 501 loads data of the hypervisor 403 from the memory 307 for firmware to any one of memories 303. Alternatively, the core 501 may read data of the hypervisor 403 directly from the memory 307 for firmware, which is connected to the CPU unit 301. By reading and operating instruction codes of the hypervisor 403 in sequence, the core 501 executes a processing for the hypervisor 403.

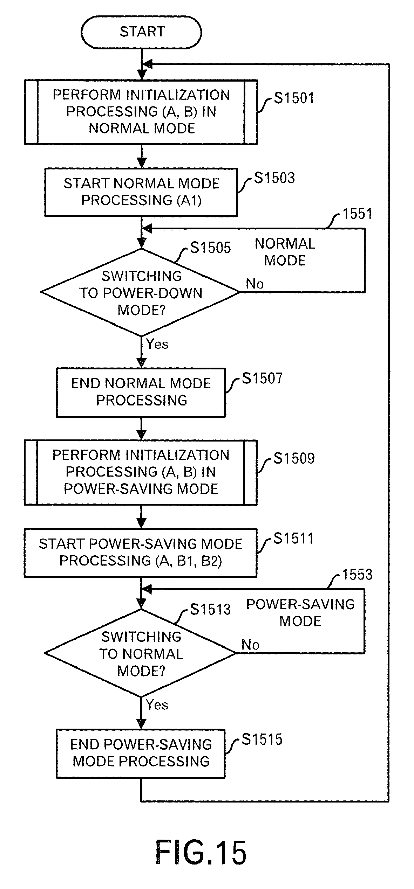

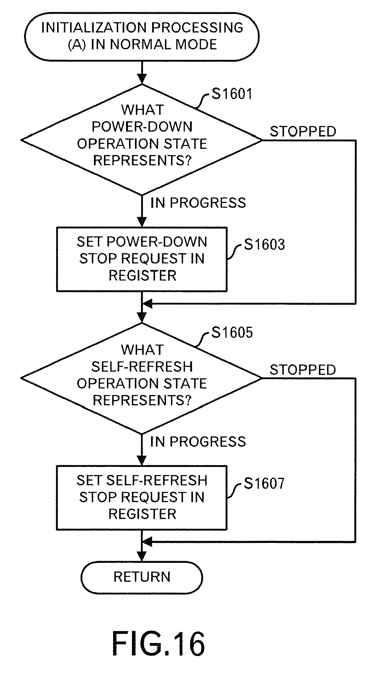

Next, a main processing by the hypervisor 403 will be explained. FIG. 15 illustrates a processing flow of the main processing by the hypervisor 403 as one example in this first embodiment. The first initialization unit 1431 performs initialization processing in the normal mode (S1501). In this embodiment, the first initialization unit 1431 performs an initialization processing (A) in the normal mode. With this processing, the state shifts to the initial state in the normal mode. The initialization processing (A) in the normal mode will be explained later using FIG. 16.

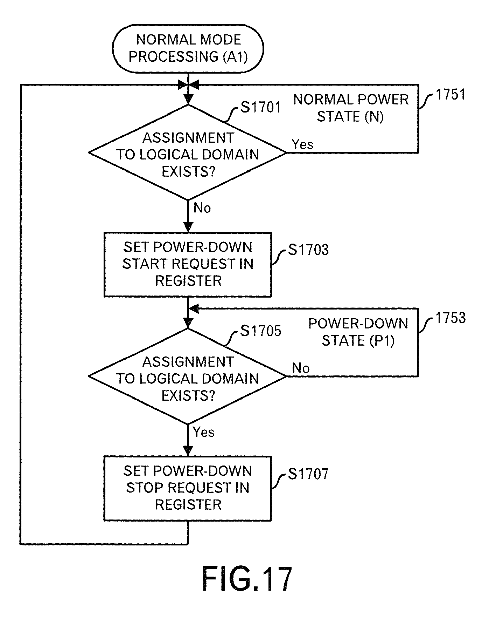

Next, the first initialization unit 1431 activates the normal mode processing (S1503). In the normal mode processing, a transition processing in the normal mode is performed. In this embodiment, the first initialization unit 1431 activates a normal mode processing (A1). The normal mode processing (A1) will be described later using FIG. 17. The normal mode processing is executed as a different process in parallel with the main processing. After the normal mode processing has been activated, the processing moves to the next processing without waiting for the end of the normal mode processing.

The receiving unit 1401 determines whether or not the switching to the power-saving mode was made (S1505). When it is determined that the switching to the power-saving mode is not made, the processing returns to the S1505 through a path 1551. In other words, the mode is still the normal mode while the switching to the power-saving mode is not made.

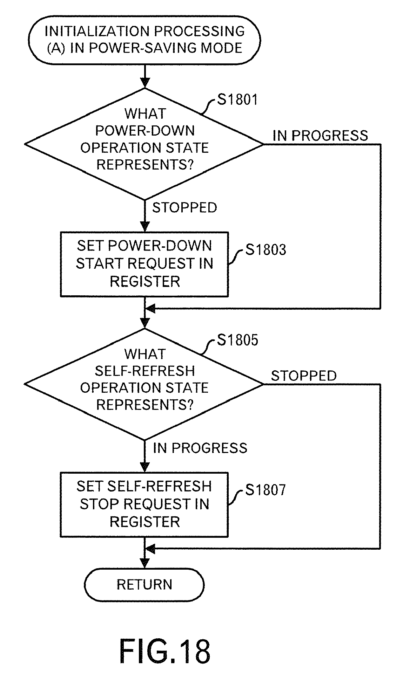

When it is determined that the switching to the power-saving mode was made, the second initialization unit 1451 ends the normal mode processing (S1507). The second initialization unit 1451 then performs an initialization processing in the power-saving mode (S1509). In this embodiment, the second initialization unit 1451 performs an initialization processing (A) in the power-saving mode. As a result of this processing, the state moves to the initial state of the power-saving mode. The initialization processing (A) in the power-saving mode will be described later using FIG. 18.

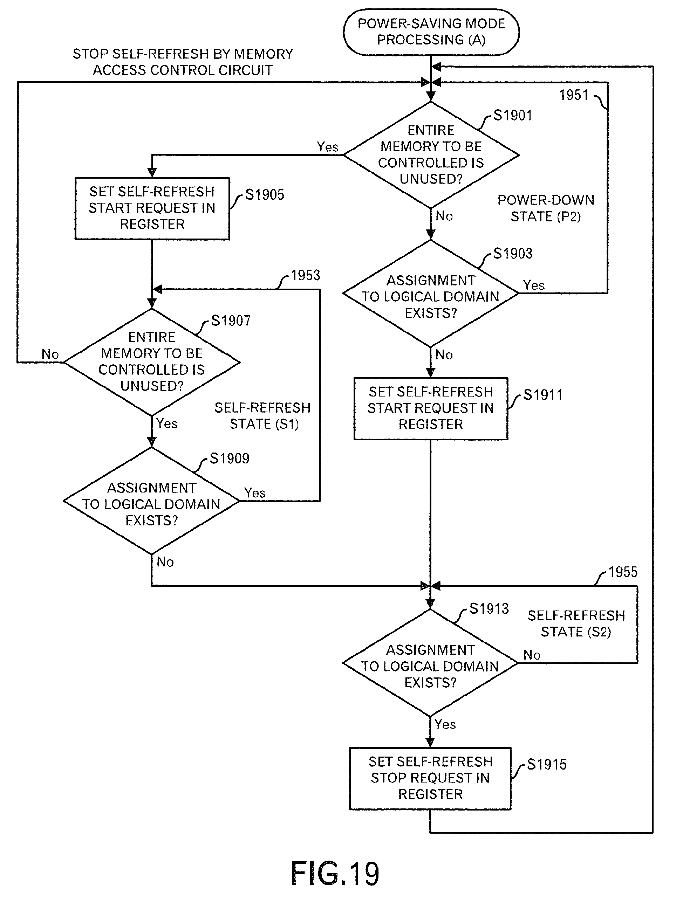

The second initialization unit 1451 activates a power-saving mode processing (S1511). In the power-saving mode processing, a transition processing in the power-saving mode is performed. In this embodiment, the second initialization unit 1451 activates a power-saving mode processing (A). The power-saving mode processing (A) will be described later using FIG. 19. The power-saving mode processing is executed as a different process in parallel with the main processing. After the power-savingmode processing has been started, the processing moves to the next processing without waiting for the end of the power-saving mode processing.

The receiving unit 1401 determines whether or not the switching to the normal mode was made (S1513). When it is determined that the switching to the normal mode is not made, the processing returns to S1513 through a path 1553. In other words, the mode is still the power-saving mode while the switching to the normal mode is not made.

When it is determined that the switching to the normal mode was made, the first initialization unit 1431 terminates the power-saving mode processing (S1515). Then, the processing returns to the initialization processing in the normal mode at the S1501.

Here, the initialization processing (A) in the normal mode at S1501 will be explained. FIG. 16 illustrates a flow example of the initialization processing (A) in the normal mode. In the initialization processing (A) in the normal mode, the first initialization unit 1431 sets an initial state of the normal mode. More specifically, the first initialization unit 1431 sets the state illustrated in the record 601 in FIG. 6, or in other words, sets the normal power state (N) in which the patrol operation is being performed.

The first initialization unit 1431 reads a power-down operation state from the power management register 1105, and determines whether the power-down operation state represents "in progress", or "stopped" (S1601). When it is determined that the power-down operation state represents "in progress", the first initialization unit 1431 sets a power-down stop request in the power management register 1105 (S1603). As a result, thepower-down function is stopped. When it is determined that the power-down operation state represents "stopped", the processing moves to S1605 without performing any operation for the power management register 1105.

The first initialization unit 1431 reads a self-refresh operation state from the power management register 1105, and determines whether the self-refresh operation state represents "in progress" or "stopped" (S1605). When it is determined that the self-refresh operation state represents "in progress", the first initialization unit 1431 sets a self-refresh stop request in the power management register 1105 (S1607). As a result, the self-refresh function is stopped. When it is determined that the self-refresh operation state represents "stopped", the processing ends without performing any operation on the power management register 1105. After the processing ends, the processing then returns to S1503 in FIG. 15.

Next, the normal-mode processing (A1) that is performed at S1503 will be explained. FIG. 17 illustrates a flow example of the normal-mode processing (A1). In the normal-mode processing (A1), the first determination unit 1433 and first request unit 1435 control transition between the normal-power state (N) as the initial state, which is illustrated in the record 601 in FIG. 6, and the power-down state (P1) illustrated in the record 603.

The first determination unit 1433 determines whether or not the memory 303, which is the object of control by the memory access control circuit 505, is assigned to a logical domain 405 (S1701). When it is determined that the memory 303, which is the object of control by the memory access control circuit 505, is assigned to the logical domain 405, the processing returns to S1701 through a path 1751. While the state that is illustrated in the record 601 in FIG. 6, or in other words, the normal-power state (N) in which an assignment to the logical domain 405 exists continues, the S1701 is repeated through the path 1751.

When it is determined that the memory 303, which is the object of control by the memory access control circuit 505, is not assigned to any logical domain 405, the first request unit 1435 sets a power-down start request in the power management register 1105 (S1703). As a result, the power-down function is started. The first determination unit 1433 determines whether or not the memory 303 that is the object of control is assigned to a logical domain 405 (S1705). When it is determined that the memory 303 that is the object of control by the memory access control circuit 505 is not assigned to any logical domain 405, the processing returns to S1705 through a path 1753. While the state illustrated in the record 603 in FIG. 6, or in other words, the power-down state (P1) in which there is no assignment to the logical domain 405 continues, the S1705 is repeated through the path 1753.

When it is determined that the memory 303 that is the object of control by the memory access control circuit 505 is assigned to a logical domain 405, the first request unit 1435 sets a power-down stop request in the power management register 1105 (S1707). As a result, the power-down function is stopped. The processing then returns to the S1701. Such a processing is repeated until the processing ends in the S1507 in FIG. 15.

Next, the initialization processing (A) in the power-saving mode at S1509 will be explained. FIG. 18 illustrates a flow example of the initialization processing (A) in the power-saving mode. In the initialization processing (A) in the power-saving mode, the second initialization unit 1451 sets the initialization state in the power-saving mode. More specifically, the second initialization unit 1451 sets the state illustrated in the record 605 in FIG. 6, or in other words, the power-down state (P2) in which the patrol operation is being executed.

The second initialization unit 1451 reads a power-down operation state from the power management register 1105, and determines whether the power-down operation state represents "in progress", or "stopped" (S1801). When it is determined that the power-down operation state represents "stopped", the first initialization unit 1431 sets a power-down start request in the power management register 1105 (S1803). As a result, the power-down function is started. When it is determined that the power-down operation state represents "in progress", no operation is performed on the power management register 1105.

The first initialization unit 1431 reads a self-refresh operation state from the power management register 1105, and determines whether the self-refresh operation state represents "in progress" or "stopped" (S1805). When it is determined that the self-refresh operation state represents "in progress", the first initialization unit 1431 sets a self-refresh stop request in the power management register 1105 (S1807). As a result, the self-refresh function is stopped. When it is determined that the self-refresh operation state represents "stopped", the processing ends without performing any operation on the power management register 1105. After the processing has ended, the processing returns to the S1511 in FIG. 15.

Next, the power-saving mode processing (A) that is performed at the S1511 will be explained. FIG. 19 illustrates a flow example of the power-saving mode processing (A). In the power-saving mode processing (A), the second determination unit 1453 and second request unit 1455 control transitions among the power-down state (P2) as an initial state, which is illustrated in the record 605 in FIG.6, the self-refresh state (S1) that is illustrated in the record 607 and the self-refresh state (S2) that is illustrated in the record 609.

The second determination unit 1453 determines whether or not the entire memory 303 that is the object of control by the memory access control circuit 505 is unused during a predetermined period (S1901). When part or all of the memory 303 that is the object of control by the memory access control circuit 505 is being used during the predetermined period, this state corresponds to a state in which the memory access frequency is high. On the other hand, when the entire memory 303 that is the object of control by the memory access control circuit 505 is unused during the predetermined period, this state corresponds to a state in which the memory access frequency is low.

When it is determined that part or all of the memory 303 that is the object of control by the memory access control circuit 505 is being used during the predetermined period, the second determination unit 1453 determines whether or not the memory 303 that is the object of control is assigned to a logical domain 405 (S1903). When it is determined that the memory 303 that is the object of control by the memory access control circuit 505 is assigned to any logical domain 405, the processing returns to S1901. In this way, while the state illustrated in the record 605 in FIG. 6, or in other words, the power-down state (P2), in which there is an assignment to any logical domain and the memory access frequency is high, continues, no operation on the power management register 1105 is carried out.

Next, transition from the power-down state (P2) to the self-refresh state (S1) will be explained. When it was determined at the S1901 that the entire memory 303 that is the object of control by the memory access control circuit 505 is unused during the predetermined period, the second request unit 1455 sets a self-refresh start request in the power management register 1105 (S1905). As a result, the self-refresh function is started. The second determination unit 1453 determines whether or not the entire memory 303 that is the object of control by the memory access control circuit 505 is unused during the predetermined period (S1907). When it is determined that the entire memory 303 that is an object of control by the memory access control circuit 505 is unused during the predetermined period, the second determination unit 1453 determines whether or not the memory 303 that is the object of control is assigned to a logical domain 405 (S1909). When it is determined that the memory 303 that is the object of control is assigned to any logical domain 405, the processing returns to the S1907 through a path 1953. In this way, while the state illustrated in the record 607 in FIG. 6, or in other words, the self-refresh state (S1), in which an assignment to a logical domain 405 exists and in which the memory access frequency is low, continues, the processing returns to the S1907 through the path 1953.

Next, the transition from the self-refresh state (S1) to the power-down state (P2) will be explained. When it is determined at the S1907 that part or all of the memory 303 that is the object of control by the memory access control circuit 505 is used during the predetermined period, the processing moves to the S1901. At that time, the self-refresh is stopped by the memory access control circuit 505, so the hypervisor 403 does not perform any processing for stopping the self-refresh. More specifically, in the self-refresh control routine illustrated in FIG. 13, when it is determined at the S1311 that there is request data in the request queue 1111 while the self-refresh function is being performed, the memory access control circuit 505 cancels the self-refresh function of the memory 303 and starts the patrol operation (S1315). In this way, the processing returns to the S1901 in the power-down state (P2).

Next, the transition from the power-down state (P2) to the self-refresh state (S2) will be explained. When it is determined at the S1903 that the memory 303 that is the object of control by the memory access control circuit 505 is not assigned to any logical domain 405, the second request unit 1455 sets a self-refresh start request in the power management register 1105 (S1911). As a result, the self-refresh function is started. The second determination unit 1453 further determines whether or not the memory 303 that is the object of control is assigned to a logical domain 405 (S1913). When it is determined that the memory 303 that is the object of control is not assigned to the logical domain 405, the determination processing of the S1913 is repeated. In this way, while the state illustrated in the record 609 in FIG. 6, or in other words, the self-refresh sate (S2) in which no assignment to the logical domain 405 exists continues, the processing returns to the S1913 through a path 1955.

Next, the transition from the self-refresh state (S1) to the self-refresh state (S2) will be explained. When it is determined at the S1909 in the self-refresh state (S1) that the memory 303 that is the object of control is not assigned to any logical domain 405, the second determination unit 1453 determines whether or not the memory 303 that is the object of control is assigned to a logical domain 405 (S1913). When it is determined that the memory 303 that is the object of control is not assigned to any logical domain 405, the determination process of the S1913 is repeated. As described above, while the state illustrated in record 609 in FIG. 6, or in other words, the self-refresh state (S2) in which no assignment to the logical domain 405 exists continues, the processing returns to S1913 through the path 1955.

Next, the transition from the self-refresh state (S2) to the power-down state (P2) or the self-refresh state (S1) will be explained. When it is determined at the S1913 in the self-refresh state (S2) that the memory 303 that is the object of control is assigned to a logical domain 405, the second request unit 1455 sets a self-refresh stop request in the power management register 1105 (S1915). As a result, the self-refresh function is stopped. Then, the second determination unit 1453 determines at the S1901 whether or not the entire memory 303 that is the object of control by the memory access control circuit 505 is unused during the predetermined period.

When it is determined that part or all of the memory 303 that is the object of control by the memory access control circuit 505 is used during the predetermined period, the processing moves to the S1901 through the path 1951 in the power-down state (P2).

When it is determined that the entire memory 303 that is the object of control by the memory access control circuit 505 is unused during the predetermined period, the processing moves to the S1907 through the path 1953 in the self-refresh state (S1).

According to this embodiment, when the self-refresh of the memory 303 is started, the patrol of the memory 303 is stopped, and when the self-refresh is stopped, the patrol is restarted, so it is possible to perform the self-refresh of the memory 303 and reduce the power consumption in the waiting state. Furthermore, it is possible to suppress the power consumption of an entire computer device such as a server device.

Moreover, when the memory 303 is not assigned to any logical domain 405, the self-refresh of the memory 303 is started, and when the memory 303 is assigned to any logical domain 405, the self-refresh of the memory 303 is stopped, so it is possible to suppress the power consumption when the memory 303 is not being used.

Furthermore, in case where the access frequency of the memory 303 is low even when the memory 303 is assigned to a logical domain 405, the self-refresh of the memory 303 is started, so it is possible to suppress the power consumption when the memory 303 is not actually being used.

### [Embodiment 2]

As illustrated in FIG. 13 in the first embodiment, an example was explained in which, in the self-refresh control routine of the memory access control circuit 505, the activation of the self-refresh function and stopping of the patrol operation are linked, and the cancel of the self-refresh function and start of the patrol operation are linked. In this second embodiment, an example is explained in which, by using the hypervisor 403, the activation of the self-refresh function and the stop of the patrol operation are linked, and furthermore, the cancellation of the self-refresh function and the start of the patrol operation are linked.

In this second embodiment, as in the first embodiment, an example is explained that the state transitions illustrated in FIG. 6 are achieved.

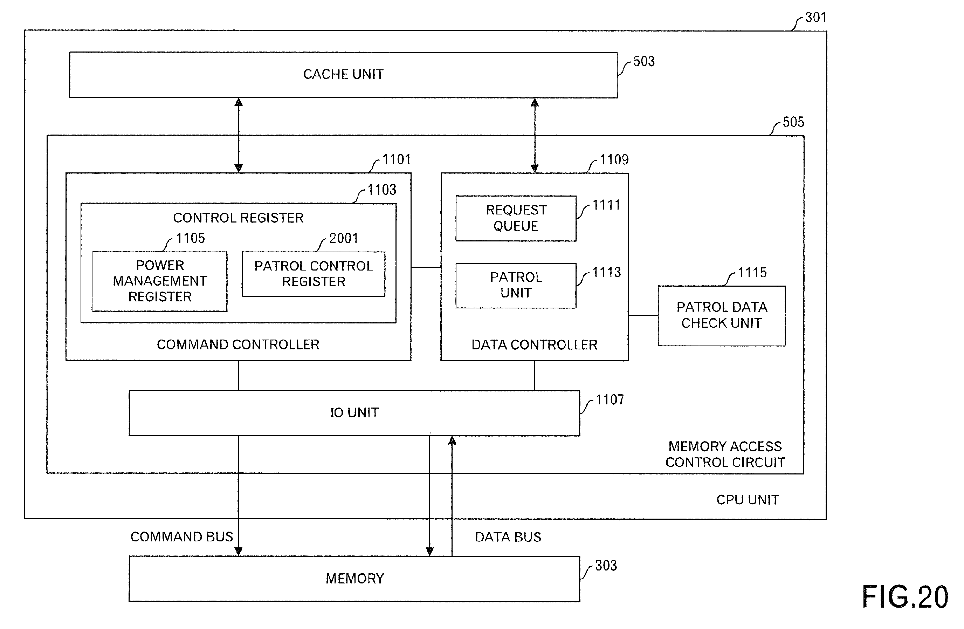

FIG. 20 illustrates a configuration example of the memory access control circuit 505 in this second embodiment. In this second embodiment, a control register 1103 has a patrol control register 2001. The patrol control register 2001 is a register for controlling the patrol operation. The patrol control register 2001 receives a patrol start request and patrol stop request as commands. A command controller 1101 receives these commands, and starts or stops a patrol operation by the data controller 1109. The patrol control register 2001 is also used for making available the patrol operation state.

Next, the operation of the memory access control circuit 505 will be explained. The power-down control routine (FIG. 12) is the same as in the first embodiment.

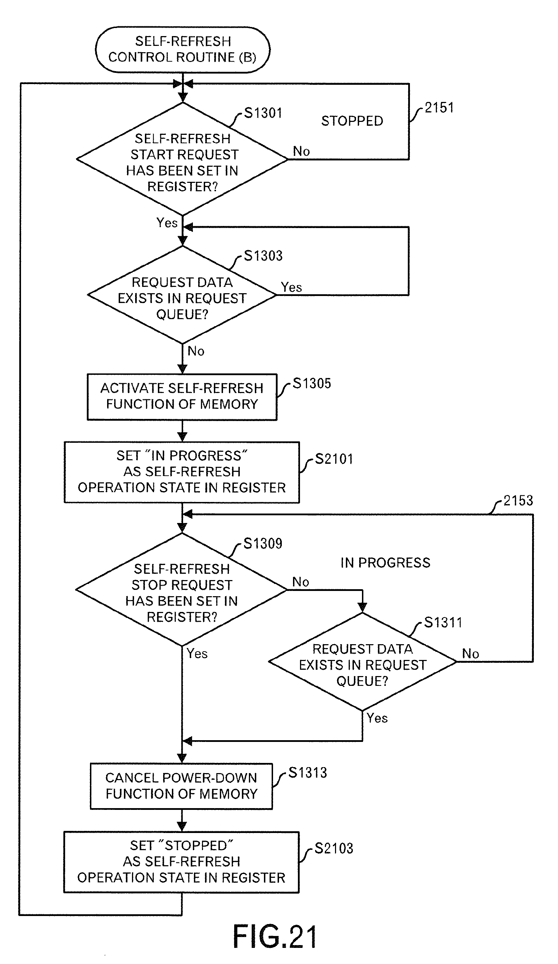

In the second embodiment, instead of the self-refresh control routine (A) illustrated in FIG. 13, a processing of a self-refresh control routine (B) is performed. FIG. 21 illustrates a processing flow example of the self-refresh control routine (B).

Steps S1301 to S1305 are the same as in FIG. 13. Moreover, while the self-refresh function is being stopped, the processing of the S1301 is repeated through a path 2515 similar to the path 1351 in FIG. 13.

At S2101, instead of the processing of the S1307 in FIG. 13, the command controller 1101 sets "in progress", as the self-refresh operation state, in the power management register 1105.

The steps S1309 to S1313 are the same as in FIG. 13. Moreover, during execution of the self-refresh function, the processing returns to S1309 through a path 2153 similar to the path 1353 in FIG. 13.

At S2103, instead of the processing of the step S1315 in FIG. 13, the command controller 1101 sets "stopped", as the self-refresh operation state, in the power management register 1105 (S2103).

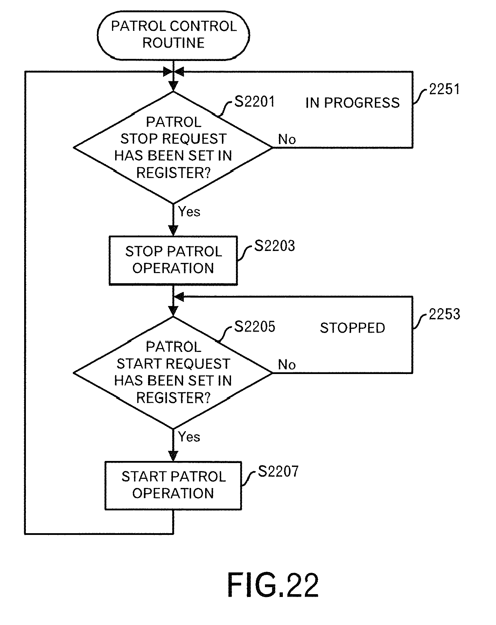

Next, the patrol control routine that is newly provided in this second embodiment will be explained. FIG. 22 illustrates a processing flow example of this patrol control routine.

The command controller 1101 determines whether or not a patrol stop request has been set in the patrol control register 2001 (S2201). When it is determined that any patrol stop request has not been set in the patrol control register 2001, the processing returns to the S2201 through a path 2251. In other words, the patrol operation is being executed while the S2201 is repeated through the path 2251.

When it is determined that the patrol stop request has been set in the patrol control register 2001, the command controller 1101 stops the patrol operation by the patrol unit 1113 (S2203).

The command controller 1101 then determines whether or not a patrol start request has been set in the patrol control register 2001 (S2205). When it is determined that any patrol start request has not been set in the patrol control register 2001, the processing returns to S2205 through a path 2253. In other words, the patrol operation is being stopped while the processing of S2205 is repeated through the path 2253.

When it is determined that the patrol start request has been set in the patrol control register 2001, the command controller 1101 starts the patrol operation by the patrol unit 1113 (S2207). The command controller 1101 then returns to S2201.

The explanation of the memory access control circuit 505 in this second embodiment is finished. Next, a processing of the hypervisor 403 in this second embodiment will be explained. A main processing flow of the hypervisor 403 in this second embodiment is as illustrated in FIG. 15.

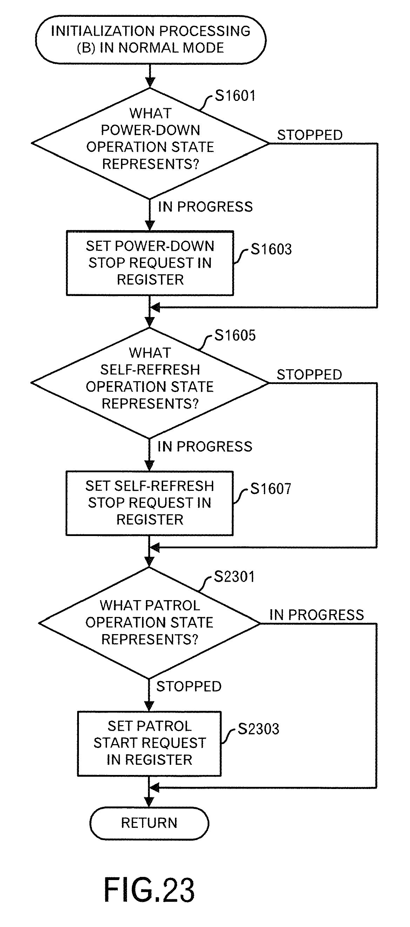

In this second embodiment, instead of the initialization processing (A) in the normal mode, which was illustrated in FIG. 16 in the first embodiment, an initialization processing (B) in the normal mode is performed. FIG. 23 illustrates a flow example of the initialization processing (B) in the normal mode.

The steps S1601 to S1607 are the same as in the case of the initialization processing (A) in the normal mode, which is illustrated in FIG. 16. In the initialization processing (B) in the normal mode, the first initialization unit 1431 further identifies the patrol operation state from the patrol control register 2001, and determines whether the patrol operation state represents "inprogress"or"stopped" (S2301). When it is determined that the patrol operation state represents "stopped", the first initialization unit 1431 sets a patrol start request in the patrol control register 2001 (S2303). When it is determined that the patrol operation state represents "in progress", the processing ends without any operation being performed on the patrol control register 2001. After the processing ends, the processing returns to the step S1503 in FIG. 15.

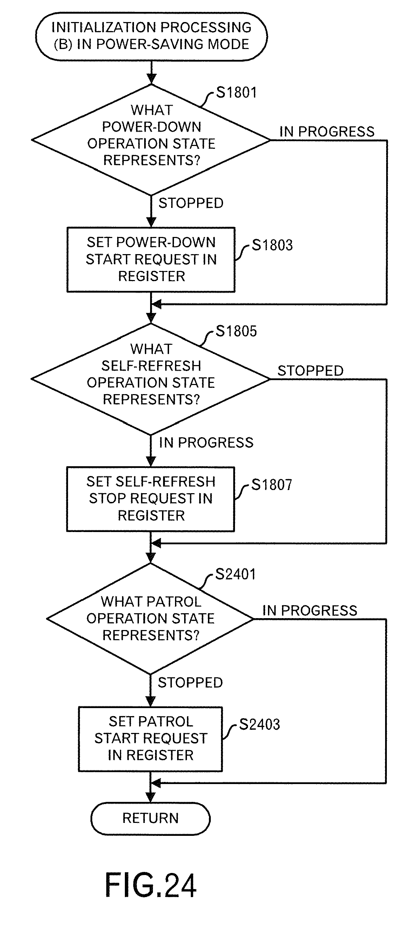

In this second embodiment, the initialization processing (B) in the power-saving mode is performed instead of the initialization processing (A) in the power-saving mode, which is illustrated in FIG. 18 in the first embodiment. FIG. 24 illustrates a flow example of the initialization processing (B) in the power-saving mode.

The steps S1801 to S1807 are the same as in the case of the initialization processing (A) in the power-saving mode, which is illustrated in FIG. 18. In the initialization processing (B) in the power-saving mode, the second initialization unit 1451 further reads the patrol operation state from the patrol control register 2001, and determines whether the patrol operation state represents "in progress" or "stopped" (S2401). When it is determined that the patrol operation state represents "stopped", the second initialization unit 1451 sets the patrol start request in the patrol control register 2001 (S2403). When it is determined that the patrol operation state represents "in progress", the processing ends without any operationperformedon the patrol control register 2001. After the processing ends, the processing returns to the S1511 in FIG. 15.

The normal mode processing is the same as the processing illustrated in FIG. 17 of the first embodiment.

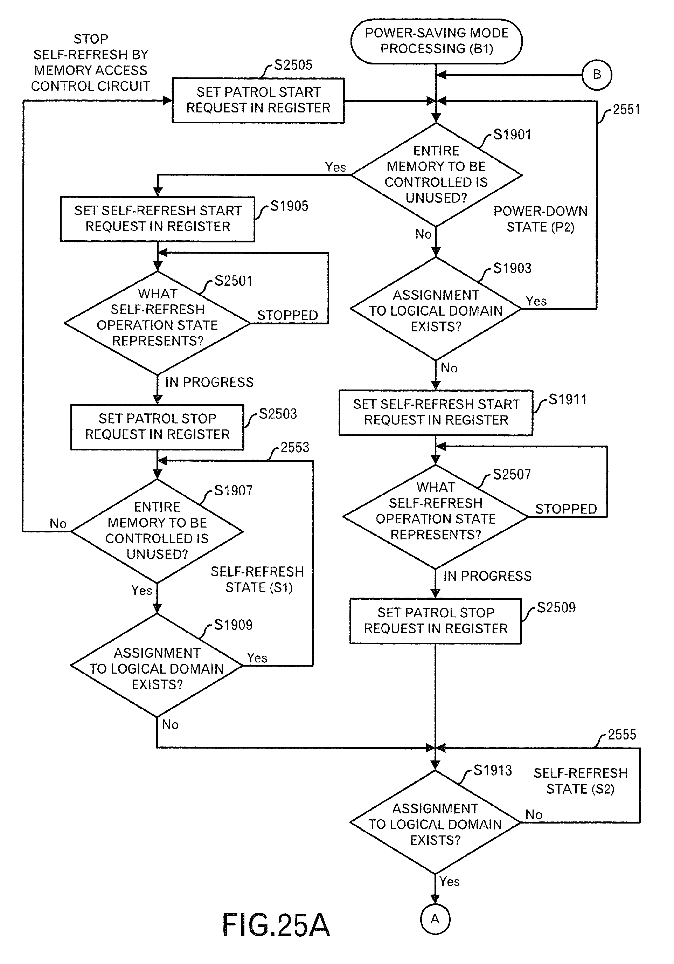

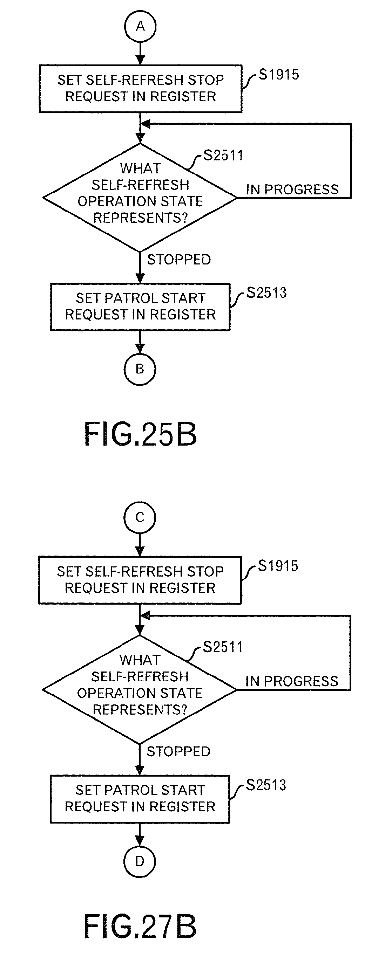

In this second embodiment, instead of the power-saving mode processing (A), which is illustrated in FIG. 19 of the first embodiment, the power-saving modeprocessing (B1) is performed. FIG. 25AandFIG. 25B illustrate a flow example of thepower-savingmodeprocessing (B1). Aloop, which includes the determination at the S1901 and S1903 and a path 2551 and is similar to the loop including the path 1951 in FIG. 19, corresponds to the power-down state (P2). A loop, which includes the determination at the S1907 and S1909 and a path 2553 and is similar to the loop including the path 1953 in FIG. 19, corresponds to the self-refresh state (S1). A loop, which includes the determination at the S1913 and a path 2555, and is similar to the loop including the path 1955 in FIG. 19, corresponds to the self-refresh state (S2).

Moreover, the processing at the S1905 for setting a self-refresh start request in the power management register 1105 when shifting from the power-down state (P2) to the self-refresh state (S1), the processing at the S1911 for setting a self-refresh start request in the power-management register 1105 when shifting from the power-down state (P2) to the self-refresh state (S2), and the processing at the S1915 for setting a self-refresh stop request in the power-management register 1105 when shifting from the self-refresh state (S2) to the power-down state (P2) orself-refreshstate (S1) are the same as in the case of the power-saving mode processing (A) illustrated in FIG. 19.

In this second embodiment, after the self-refresh start request has been set in the power management register 1105 at S1905, the second determination unit 1453 determines whether or not the self-refresh operation state represented by the power management register 1105 has become "in progress" (S2501). When the self-refresh operation state represented by the power management register 1105 is "stopped", the processing of the step S2501 is repeated, and when the self-refresh operation state represented by the power management register 1105 has become "in progress", the second request unit 1455 sets the patrol stop request in the patrol control register 2001 (S2503).

Similarly, after the self-refresh start request has been set in the power management register 1105 at the S1911, the second determination unit 1453 determines whether or not the self-refresh operation state represented by the power management register 1105 has become "in progress" (S2507). When the self-refresh operation state represented by the power management register 1105 is "stopped", the processing of the S2507 is repeated, and when the self-refresh operation state represented by the power management register 1105 has become "in progress", the second request unit 1455 sets a patrol stop request in the patrol control register 2001 (S2509).

Furthermore, after a self-refresh stop request has been set in the power management register 1105 at the S1915, the second determination unit 1453 determines whether or not the self-refresh operation state represented by the power management register 1105 has become "stopped" (S2511). When the self-refresh operation state represented by the power management register 1105 is"inprogress", theprocessingof the S2511 is repeated, and when the self-refresh operation state represented by the power management register 1105 has become "stopped", the second request unit 1455 sets a patrol start request in the patrol control register 2001 (S2513).

Moreover, when it is determined at the S1907 that part or all of the memory 303 that is the object of control by the memory access control circuit 505 is being used, as was explained for the first embodiment, the self refresh by the memory access control circuit 505 is stopped. Therefore, in response to this, the second request unit 1455 sets a patrol start request in the patrol control register 2001 (S2505).

After the processing at the S1913 illustrated in FIG. 25A, the processing moves to the S1915 in FIG. 25B by way of the terminal A. Moreover, after the processing at the S2513 illustrated in FIG. 25B, the processing moves to the step S1901 in FIG. 25A by way of the terminal B.

In this way, when the hypervisor 403 of this second embodiment performs an operation for the self-refresh function, the hypervisor 403 checks the transition of the self-refresh operation state, and then also performs control of the patrol operation. Therefore, it is possible to control the patrol operation in connection with the self-refresh by the program.

### [Embodiment 3]

Inheriting the role of the memory access control circuit 505 and hypervisor 403 in the second embodiment, an example of achieving the state transition that differs from that in the first and second embodiments will be explained. Only the points that differ from the second embodiment will be explained. The other aspects are the same as in the second embodiment.

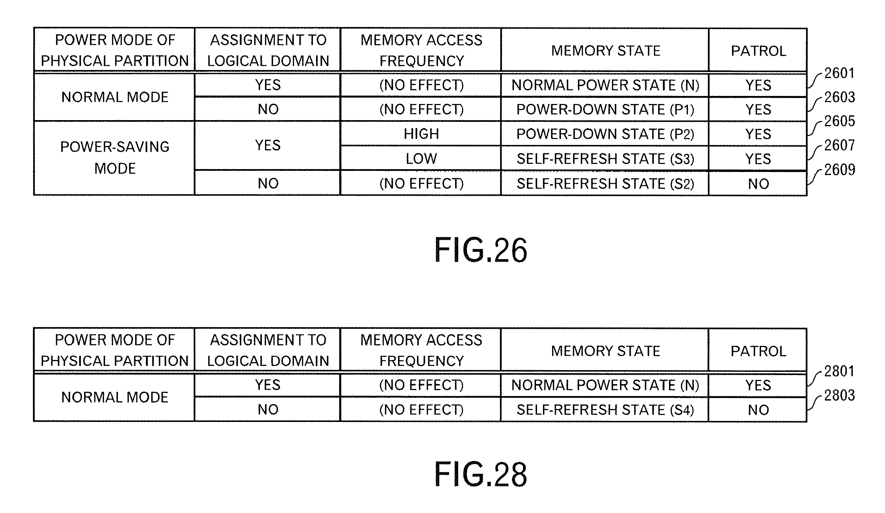

FIG. 26 illustrates an overview of the power modes in this third embodiment. The state transition achieved in this third embodiment will be explained in comparison with the power modes in FIG. 6 in the first embodiment.

The normal power state (N) illustrated in record 2601, the power-down state (P1) illustrated in record 2603, the power-down state (P2) illustrated in record 2605 and the self-refresh state (S2) illustrated in record 2609 are the same as in the records 601 to 605 and 609 illustrated in FIG. 6. Record 2607 differs from the self-refresh state (S1) illustrated in the record 607 in FIG. 6 by whether or not there is patrol. In the power-saving mode in the record 2607, when there is an assignment to a logical domain 405, and the memory access frequency is low, a patrol operation is executed in the self-refresh state.

In this third embodiment, instead of the power-saving mode processing (B1) that is illustrated in FIG. 25A and FIG. 25B of the second embodiment, a power-saving mode processing (B2) is performed.

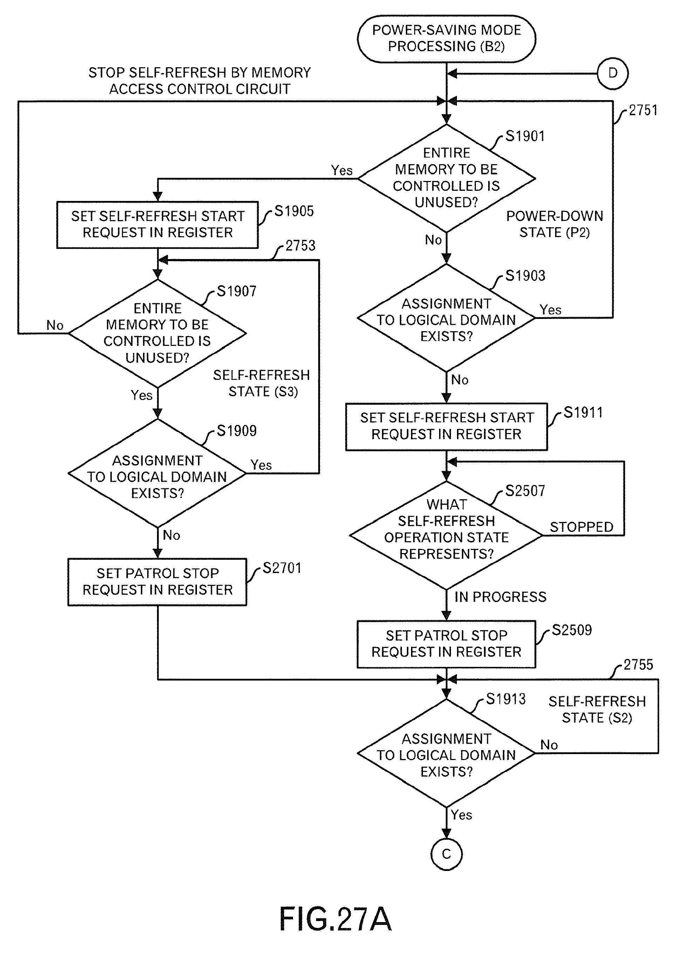

FIG. 27A and FIG. 27B illustrate a flow example of the power-saving mode processing (B2). In the self-refresh state (S3) in this third embodiment, the patrol operation is not stopped. Therefore, after the self-refresh function has been started at the S1905, the determination of the self-refresh operation state illustrated in FIG. 25A (S2501), and the processing for the patrol stop request (S2503) are not performed. Moreover, the processing for the patrol start request (S2505) is also not performed.

However, when shifting from the self-refresh state (S3) to the self-refresh state (S2), the patrol operation is stopped. Therefore, when it is determined, at the S1909, that the memory 303 that is the object of control is not assigned to any logical domain 405, the second request unit 1455 sets a patrol stop request in the patrol control register 2001 (S2701).

After the processing at the S1913 illustrated in FIG. 27A, the processing moves to the S1915 in FIG. 27B by way of the terminal C. Moreover, after the processing in the S2513 illustrated in FIG. 27B, the processing moves to the S1901 in FIG. 27A by way of the terminal D.

When the memory 303 is assigned to any logical domain 405 and the memory access frequency is low, it is possible to ensure the data stored in the memory 303 even when waiting due to the self-refresh.

### [Embodiment 4]

In embodiments 1 to 3, mainly examples of state transitions between the self-refresh state and the power-down state as the initial state were explained, however, in fourth and fifth embodiments, examples of state transitions between the self-refresh state and the normal power state being the initial state, will explained.

Moreover, in the embodiments 1 to 3, examples handling the two modes of the normal mode and power-saving mode, were given, however, the power mode may include one mode. In addition, the power mode may include three or more modes. In the embodiments 4 and 5, examples using one power mode are explained.

As explained in the first embodiment, this explanation presumes that in the self-refresh control routine by the memory access control circuit 505, the activation of the self-refresh function and the stop of the patrol operation are linked, and cancellation of the self-refresh function and start of the patrol operation are linked.

FIG. 28 is a drawing illustrating an overview of the power mode in this fourth embodiment. In this example, the power mode is just the normal mode. Record 2801 and record 2803 illustrate the two states in the normal mode. As illustrated in the record 2801, when there is an assignment to the logical domain 405, the memory state is controlled so that a patrol operation is performed in the normal power state (N). As illustrated in the record 2803, when there is no assignment to the logical domain 405, the memory state is controlled so that a patrol operation is not performed in the self-refresh state (S4).

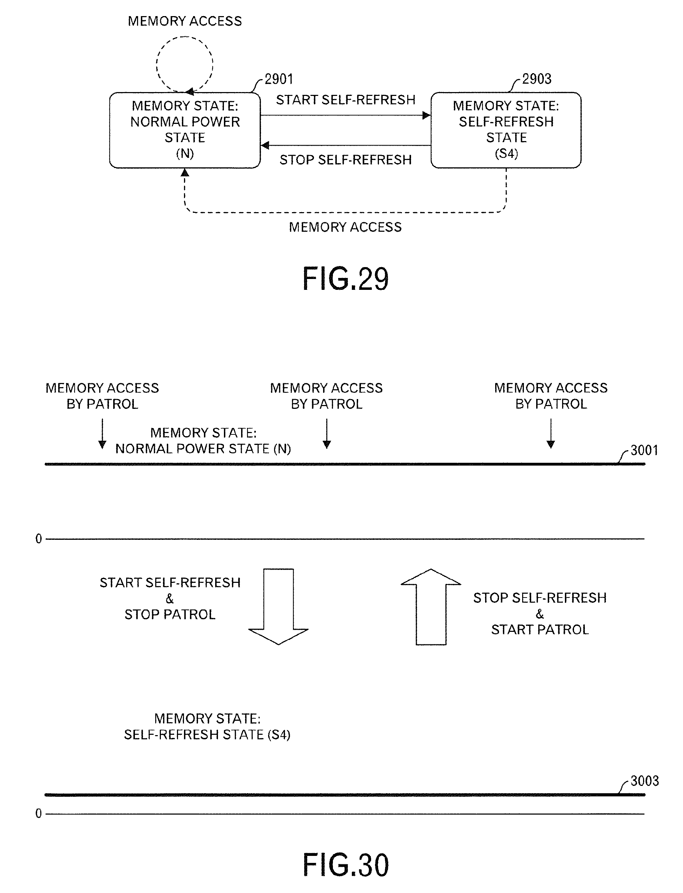

FIG. 29 illustrates the state transition in the normal mode in this fourth embodiment. In the normal power state (N) 2901, the memory state does not shift even when there is an access to the memory 303. In the normal power state (N) 2901, the memory state shifts to the self-refresh state (S4) 2903 when causing the self-refresh function of the memory 303 to be activated. In the self-refresh state (S4) 2903, the memory state shifts to the normal power state (N) 2901 when the self-refresh function of the memory 303 stops. In the self-refresh state (S4) 2903, the memory state shifts to the normal power state (N) 2901 even when there is an access to the memory 303.

FIG. 30 illustrates the power consumption in the normal mode in this fourth embodiment. When the memory state is the normal power state (N), the power consumption 3001 does not change even when there is an access to the memory 303 by the patrol operation. When the self-refresh function of the memory 303 is activated and the patrol operationstops, the power consumption 3003 is steadily kept low. When the self-refresh function is stopped and the patrol operation is started again, the power consumption returns to the state of the power consumption 3001.

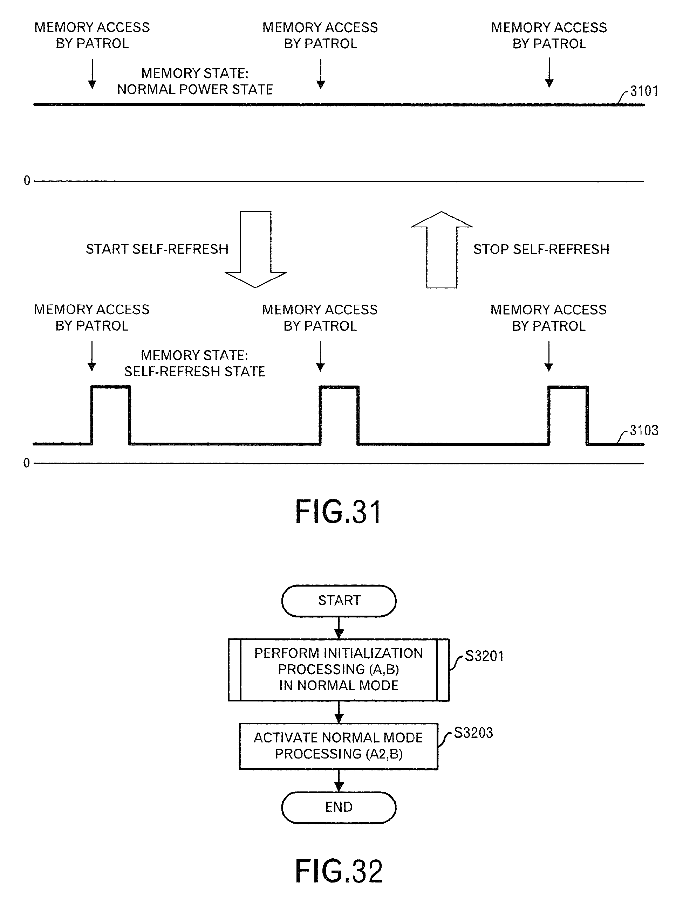

Here, for comparison, a case in which the patrol operation is not stopped is also explained. FIG. 31 illustrates the power consumption for the case in which the patrol operation is performed in the self-refresh state. When the patrol operation continues even though the self-refresh function is activated, the power consumption 3103 becomes high each time the memory 303 is accessed by the patrol operation. Therefore, when compared with the case of FIG. 30, the overall power-saving effect becomes small.

This fourth embodiment uses the configuration of the memory access control circuit 505 illustrated in FIG. 11 of the first embodiment. Moreover, this fourth embodiment uses the processing of the self-refresh control routine (A) illustrated in FIG. 13 of the first embodiment. The second mode controller 1405 may be omitted in the hypervisor 403 illustrated in FIG. 14.

FIG. 32 illustrates an example of a main processing flow by the hypervisor 403 in the fourth embodiment. The first initialization unit 1431 performs an initialization processing in the normal mode (S3201). More specifically, the first initialization unit 1431 performs the initialization processing (A) in the normal mode, which is illustrated in FIG. 16 of the first embodiment.

Next, the first initialization unit 1431 starts the normal-mode processing (S3203). More specifically, the first initialization unit 1431 performs a normal mode processing (A2), instead of the normal-mode processing (A1) illustrated in FIG. 17 of the first embodiment.

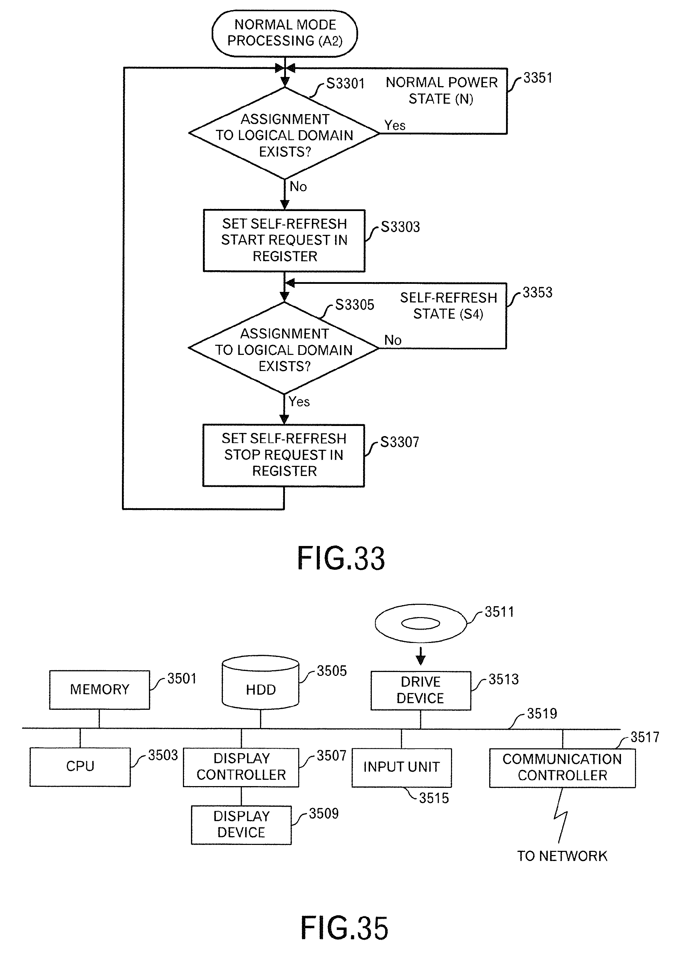

FIG. 33 illustrates a flow example of the normal-mode processing (A2). In the normal-mode processing, the first determination unit 1433 and first request unit 1435 control state transitions between the normal power state (N) as the initial state, which is illustrated in the record 2801 in FIG. 28, and the self-refresh state (S4) that is illustrated in the record 2803.

The first determination unit 1433 determines whether or not the memory 303 that is the object of control by the memory access control circuit 505 is assigned to a logical domain 405 (S3301). When it is determined that the memory 303 that is the object of control by the memory access control circuit 505 is assigned to any logical domain 405, the processing of the S3301 is repeated through a path 3351. In this way, while the state illustrated in the record 2801inFIG. 28, or in other words, the normal power state (N) inwhichanassignment toanylogicaldomain405existscontinues, the processing of the S3301 is repeated.

When it is determined that the memory 303 that is the object of control by the memory access control circuit 505 is not assigned to any logical domain 405, the first request unit 1435 sets a self-refresh start request in the power management register 1105 (S3302). As a result, the self-refresh function is activated. The first determination unit 1433 determines whether or not the memory 303 that is the object of control is assigned to a logical domain 405 (S3305). When it is determined that the memory 303 that is the object of control by the memory access control circuit 505 is not assigned to any logical domain 405, the processing of the S3305 is repeated through a path 3353. In this way, while thestateillustratedinrecord2803inFIG. 28, or inotherwords, the self-refresh state (S4) in which there is no assignment to the logical domain 405 continues, the processing of the S3305 is repeated.

When it is determined that the memory 303 that is the object of control by the memory access control circuit 505 is assigned to a logical domain 405, the first request unit 1435 sets a self-refresh stop request in the power management register 1105 (S3307), which results in the self-refresh functionbeing stopped. The processing then returns to the S3301.

According to this fourth embodiment, it is possible to omit the patrol operation by the memory access control circuit 505 in the self-refresh state and to reduce the power consumption even when switching between the normal power state and the self-refresh state.

### [Embodiment 5]

As described in the embodiments 2 and 3, an example is explained in which, in the processing by the hypervisor 403, the state transition illustrated in the fourth embodiment is achieved by linking the activation of the self-refresh function and the stop of the patrol operation, and by linking the cancellation of the self-refresh function and the starting of the patrol operation.

The fifth embodiment uses the configuration of the memory access control circuit 505 that is illustrated in FIG. 20 of the second embodiment. Moreover, the fifth embodiment uses the processing of the self-refresh control routine (B) illustrated in FIG. 21 and the patrol control routine illustrated in FIG. 22 of the second embodiment. The main processing is according to the processing flow illustrated in FIG. 32 of the fourth embodiment. Furthermore, the fifth embodiment uses the initialization processing (B) in the normal mode, which is illustrated in FIG. 23 of the second embodiment.

In the fifth embodiment, the normal-mode processing (B) is performed instead of the normal-mode processing (A2) illustrated in FIG. 33 of the fourth embodiment.

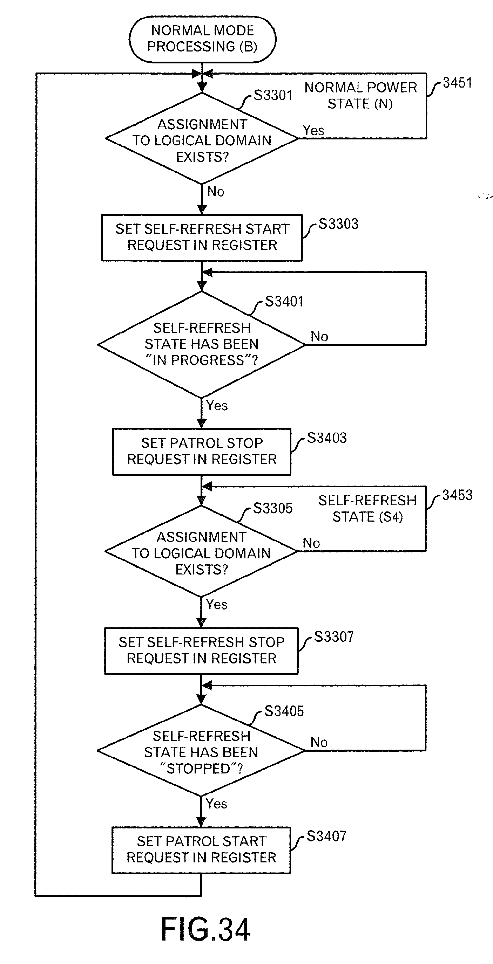

FIG. 34 illustrates a flow example of the normal-mode processing (B). Asexplainedinthenormal-modeprocessing (A1) inFIG. 33, the first determination unit 1433 and first request unit 1435 control state transitions between the normal power state (N) as the initial state, which is illustrated in the record 2801 in FIG. 28, and the self-refresh state (S4) that is illustrated in the record 2803.

Steps S3301 and S3303 are the same as in FIG. 33. Moreover, a loop including the path 3451 and relating to the normal power state (N) is the same as a loop including a path 3351 in FIG. 33. At the S3303, when a self-refresh start request is set in the power management register 1105, the first determination unit 1433 determines whether or not the self-refresh operation state represents "in progress" (S3401). When the self-refresh operation state represented by the power management register 1105 is not "in progress", the processing of the S3401 is repeated. When the self-refresh operation state represented by the power management register 1105 has become "in progress", the second request unit 1455 sets a patrol stop request in the patrol control register 2001 (S3403).

Furthermore, after the self-refresh stop request has been set in the power management register 1105 at the S3307, the second determination unit 1453 determines whether or not the self-refresh operation state represented by the power management register 1105 is "stopped" (S3405), and when the self-refresh operation state represented by the power management register 1105 is not "stopped", the S3405 is repeated. When the self-refresh operation state represented by the power management register 1105 has become "stopped", the second request unit 1455 sets a patrol start request in the patrol control register 2001 (S3407).

In this way, it is possible to omit the patrol operation by control of the hypervisor 403 that is executed by the core 501 in the self-refresh state, and to further reduce the power consumption even when switching the states between the normal power state and the self-refresh state.

Although the embodiments of this invention were explained above, this invention is not limited to those embodiments. For example, the aforementioned functional block configurations do not always correspond to a program module configuration.

Moreover, the aforementioned configurations of the storage areas are mere examples, and may be changed appropriately. Furthermore, as for the processing flows, as long as the processing results do not change, the order of the steps may be changed, and may be executed in parallel.

In addition, the aforementioned server 201 is a computer devices as illustrated in FIG. 35. That is, a memory 3501 (storage device), a CPU 3503 (processor), a hard disk drive (HDD) 3505, a display controller 3507 connected to a display device 3509, a drive device 3513 for a removable disk 3511, an input device 3515, and a communication controller 3517 for connection with a network are connected through a bus 3519 as illustrated in FIG.35. An operating system (OS) and an application program for carrying out the foregoing processing in the embodiment, are stored in the HDD 3505, and when executed by the CPU 3503, they are read out from the HDD 3505 to the memory 3501. As the need arises, the CPU 3503 controls the display controller 3507, the communication controller 3517, and the drive device 3513, and causes them to perform predetermined operations. Moreover, intermediate processing data is stored in the memory 3501, and if necessary, it is stored in the HDD 3505. In this embodiment of this technique, the application program to realize the aforementioned functions is stored in the computer-readable, non-transitory removable disk 3511 and distributed, and then it is installed into the HDD 3505 from the drive device 3513. It may be installed into the HDD 3505 via the network such as the Internet and the communication controller 3517. In the computer as stated above, the hardware such as the CPU 3503 and the memory 3501, the OS and the application programs systematically cooperate with each other, so that various functions as described above in details are realized. In this example, CPU 3503 corresponds to the memory control unit 505, and the controlled main memories are included in the memory 3501. Furthermore, the memory for firmware, which stores the firmware is included in the memory 3501.

The aforementioned embodiments are outlined as follows:
An information processing apparatus relating to the embodiments includes: (A) one or plural memories, each of which includes a self-refresh function; and (B) a memory control unit that stops a patrol that includes reading and error correction with respect to a memory among the one or plural memories, upon starting self-refresh of the one or plural memories, and that restarts the patrol, upon stopping the self-refresh of the one or plural memories.

According to this configuration, it is possible to reduce the power consumption in a waiting state by executing, by the memory, the self-refresh, and to also reduce the power consumption as the entire information processing apparatus.

Moreover, the aforementioned memory control unit may stop the self-refresh of the one or plural memories and restarts the patrol, in response to an access request to the one or plural memories.

In such a case, when returning from the waiting state of the memory, the patrol can be restarted automatically.

Moreover, the aforementioned memory control unit may start the self-refresh of the one or plural memories, upon detecting that a memory among the one or plural memories is not assigned to any logical domain, and may stop the self-refresh of the one or plural memories, upon detecting that the memory among the one or plural memories is assigned to a logical domain.

Thus, it is possible to suppress the power consumption in a state in which the memory is not used.

Furthermore, the aforementioned memory control unit may start the self-refresh of the one or plural memories, upon detecting that a memory among the one or plural memories is assigned to a logical domain and an access frequency to the memory among the one or plural memories is equal to or less than a threshold.

According to this configuration, it is possible to suppress the power consumption in a state in which the memory is not actually used.

Moreover, the aforementioned memory control unit may start the self-refresh of the one or plural memories, and continues the patrol, upon detecting that a memory among the one or plural memories is assigned to a logical domain, and an access frequency to the memory among the one or plural memories is equal to or less than a threshold.

Thus, it is possible to suppress the power consumption in a state in which the memory is not actually used, and ensure data stored in the memory, when returning from the waiting state.

A memory control unit relating to the embodiments includes: (A) a patrol unit that performs a patrol including reading and error correction with respect to a memory among one or plural memories that has a self-refresh function; and (B) a controller that stops the patrol, upon starting self-refresh of the one or plural memories, and that restarts the patrol, upon stopping the self-refresh of the one or plural memories.

By doing so, it is possible to reduce the power consumption caused by the patrol in a waiting state.

In addition, the aforementioned controller may stop the self-refresh of the one or plural memories and restarts the patrol, in response to an access request to the one or plural memories.

Thus, when returning from the waiting state of the memory, it is possible to automatically restart the patrol.

Moreover, the aforementioned controller may include one or plural memory access control circuits to be connected to the one or plural memories.

Thus, it is possible to control the patrol together with the self-refresh using circuits.

Furthermore, the aforementioned controller may include an arithmetic unit that performs arithmetic operations. In such a case, the arithmetic unit may execute a processing according to a control program for stopping the patrol, upon starting self-refresh of the one or plural memories, and for restarting the patrol, upon stopping the self-refresh of the one or plural memories.

According to this configuration, it is possible to control the patrol together with the self-refresh using the control program.

Incidentally, it is possible to create a program causing a computer to execute the aforementioned processing, and such a program is stored in a computer readable storage medium or storage device such as a flexible disk, CD-ROM, DVD-ROM, magneto-optic disk, a semiconductor memory, and hard disk. Inaddition, the intermediate processing result is temporarily stored in a storage device such as a main memory or the like.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the spirit and scope of the invention.

## Claims

1. An information processing apparatus, comprising:
one or plurality of memories, each of which includes a self-refresh function; and
a memory control unit that stops a patrol that includes reading and error correction with respect to a memory among the one or plurality of memories, upon starting self-refresh of the one or plurality of memories, and that restarts the patrol, upon stopping the self-refresh of the one or plurality of memories.

2. The information processing apparatus as set forth in claim 1, wherein the memory control unit stops the self-refresh of the one or plurality of memories and restarts the patrol, in response to an access request to the one or plurality of memories.

3. The information processing apparatus as set forth in claim 1 or 2, wherein the memory control unit starts the self-refreshof the one orplurality of memories, upon detecting that a memory among the one or plurality of memories is not assigned to a logical domain, and stops the self-refresh of the one or plurality memories, upon detecting that the memory among the one or plurality of memories is assigned to a logical domain.

4. The information processing apparatus as set forth in claim 1 or 2, wherein the memory control unit starts the self-refreshof the one orplurality of memories, upon detecting that a memory among the one or plurality of memories is assigned to a logical domain and an access frequency to the memory among the one or plurality of memories is equal to or less than a threshold.

5. The information processing apparatus as set forth in claim 1 or 2, wherein the memory control unit starts the self-refreshof the one orplurality of memories, and continues the patrol, upon detecting that a memory among the one or plurality of memories is assigned to a logical domain, and an access frequency to the memory among the one or plurality of memories is equal to or less than a threshold.

6. A memory control unit, comprising:
a patrol unit that performs a patrol including reading and error correction with respect to a memory among one or plurality of memories that has a self-refresh function; and
a controller that stops the patrol, upon starting self-refresh of the one or plurality of memories, and that restarts the patrol, upon stopping the self-refresh of the one or plurality of memories.

7. The memory control unit as set forth in claim 6, wherein the controller stops the self-refresh of the one or plurality of memories and restarts the patrol, in response to an access request to the one or plurality of memories.

8. The memory control unit as set forth in claim 6 or 7, wherein the controller includes one or plural memory access control circuits to be connected to the one or plurality of memories.

9. The memory control unit as set forth in any one of claims 6 to 8, wherein the controller includes an arithmetic unit that performs arithmetic operations, and
the arithmetic unit executes a processing according to a control program for stopping the patrol, upon starting self-refresh of the one or plurality of memories, and for restarting the patrol, upon stopping the self-refresh of the one or plurality of memories.

10. A memory control method, comprising:
stopping a patrol that includes reading and error correction with respect to a memory among one or plurality of memories that include a self-refresh function, upon starting self-refresh of the one or plurality of memories; and
restarting the patrol, upon stopping the self-refresh of the one or plurality of memories.

11. A program for causing a computer to execute the memory control method as set forth in claim 10.
